# EUROPÄISCHE PATENTSCHRIFT

(11) **EP 0 489 681 B1**
(45) Veröffentlichungstag und Bekanntmachung des Hinweises auf die Patenterteilung: **19.10.1994**
(21) Anmeldenummer: 91710040.6
(22) Anmeldetag: 19.11.1991
(51) Int. Cl.: B07C 5/14, B26D 7/06, B27B 5/06

(54) **Verfahren zum Verschieben kantenbündig aufeinandergestapelter streifen- oder plattenförmiger Werkstücke auf einer reibungsarmen Werkstückauflage, sowie Vorrichtung zur Durchführung dieses Verfahrens**
Method and apparatus for moving closely juxtaposed stacked strips or panel shaped workpieces on a low friction work support surface
Procédé et dispositif pour déplacer des pièces en forme de bandes ou de panneaux, empilés et juxtaposés sur une surface de support à faible coefficient de frottement

(30) Priorität: 03.12.1990 DE 4038516
(43) Veröffentlichungstag der Anmeldung: 10.06.1992
(73) Patentinhaber: Jenkner, Erwin, D-75391 Gechingen (DE)
(72) Erfinder: Jenkner, Erwin, D-75391 Gechingen (DE)
(74) Vertreter: Becker, Maria, Dipl.-Phys.

(56) Entgegenhaltungen:
- EP-A- 0 164 063
- EP-A- 0 247 408
- FR-A- 2 310 210
- GB-A- 1 187 496
- GB-A- 2 080 771

## Beschreibung

Die Erfindung betrifft ein Verfahren zum Verschieben kantenbündig aufeinandergestapelter streifen- oder plattenförmiger Werkstücke auf einer reibungsarmen Werkstückauflage.

Mit dem DE-GM 73 42 992 ist eine Vorrichtung bekannt geworden, mit der Plattenstapel vereinzelt werden können, um diese vereinzelten Platten bzw. Plattenstreifen z. B. einer Leimauftragsmaschine zuzuführen. Die Plattenstapel selbst werden jedoch frei stehend der Vereinzelungsvorrichtung zugeführt, und es besteht die Gefahr, daß beim Transport die aufeinanderliegenden Platten bzw. Plattenstreifen verrutschen oder die Stapel umfallen.

Aus der EP-A-247 408 ist eine Plattenaufteil- und Sortieranlage bekannt, die eine Vielzahl von Rollenbahnen zum Transport von Plattenzuschnitten aufweist.

Aus der GB-A-1,187,496 ist eine Förderbahn für Einzelplatten bekannt, bei der ausgewählte Einzelplatten mittels eines auf deren Oberseite einwirkenden Schieberarms von der Hauptförderbahn auf eine abzweigende Förderbahn überführt werden können.

Aufgabe der Erfindung ist es, ein Verfahren anzugeben, das ein schnelles Verlagern von kantenbündig aufeinandergeschichteten streifen- oder plattenförmigen Werkstücken in horizontaler Ebene ermöglicht, ohne daß sich dabei unter Trägheitseinflüssen die zu einem Stapel aufeinandergeschichteten Werkstücke relativ zueinander verlagern können.

Diese Aufgabe wird erfindungsgemäss durch die kennzeichnenden Merkmale des Patentanspruches 1 gelöst.

Die Erfindung ermöglicht somit einen sicheren Stapeltransport, ohne dass hierzu die aufeinanderliegenden Werkstücke an ihren Seiten zueinander zu fixieren sind.

Zur Durchführung des Verfahrens ist eine Vorrichtung gemäss Patentanspruch 2 vorteilhaft geeignet, wobei diese mit besonderem Vorteil einer Plattenaufteilanlage zur Vereinzelung aufgeteilter Werkstückplatten oder Plattenstapel zugeordnet werden kann.

Vorteilhafte Ausgestaltungen der Vorrichtung sind Gegenstand der Ansprüche 3 bis 10.

In der Zeichnung ist ein Ausführungsbeispiel einer erfindungsgemässen, zur Vereinzelung von hinter einer Plattenaufteilanlage anfallenden Werkstückstapeln dienenden Vereinzelungsvorrichtung, stark schematisiert, dargestellt. Es zeigen:
- Fig. 1: eine Draufsicht der Vereinzelungsvorrichtung, deren Vereinzelungsaggregat sich in seiner Ausgangsstellung befindet und auf deren Werkstückauflagetisch ein von der Plattenaufteilanlage aufgeteilter Plattenstapel aufgeschoben worden ist;
- Fig. 2: eine Darstellung gemäss Fig. 1, wobei das Vereinzelungsaggregat in eine Übernahmestellung gesteuert ist;
- Fig. 3: eine Darstellung gemäss Fig. 1, wobei das Vereinzelungsaggregat zwei quer aufgeteilte Streifen des aufliegenden, aufgeteilten Plattenstapels in eine Übergabestellung transportiert hat;
- Fig. 4: eine Darstellung gemäss Fig. 3, wobei durch ein Anpressorgan des Vereinzelungsaggregates die beiden, in eine Übergabestellung transportierten Streifen teilweise auf einen Übernahmetisch aufgeschoben sind;
- Fig. 5: eine Darstellung gemäss Fig. 1, wobei durch das Vereinzelungsaggregat ein quer aufgeteilter Streifen in eine weitere Übergabestellung gesteuert worden ist;
- Fig. 6: einen Längsschnitt entlang der Linie VI-VI der Fig. 5, wobei eine der Rollengruppen nach unten abgesenkt und zwei andere Rollengruppen in ihrer angehobenen Transportstellung dargestellt sind;
- Fig. 7: eine Darstellung ähnlich Fig.6, wobei die in Fig. 6 in ihrer Absenkstellung gezeigte Rollengruppe in ihre Übernahmestellung angehoben und die beiden anderen Rollengruppen in ihrer Absenkstellung dargestellt sind.

Die zur Anwendung des erfindungsgemässen Verfahrens in der Zeichnung gezeigte Vereinzelungsvorrichtung 11 ist derart konzipiert, dass mit ihrer Hilfe ein von einem Werkstückauflagetisch 13 einer Plattenaufteilanlage 15 zugeführter, in dieser aufgeteilter Plattenstapel 17 vereinzelt wird. Dabei sollen Streifen A, B, C, D, E des aufgeteilten Plattenstapels 17 in zueinander senkrechten Richtungen weitergefördert werden, wobei sichergestellt sein soll, dass die kantenbündig übereinanderliegenden, quer aufgeteilten Stapelstreifen A bis E derart verlagert werden, dass sich deren aufeinandergeschichteten Plattenteile nicht zueinander verlagern.

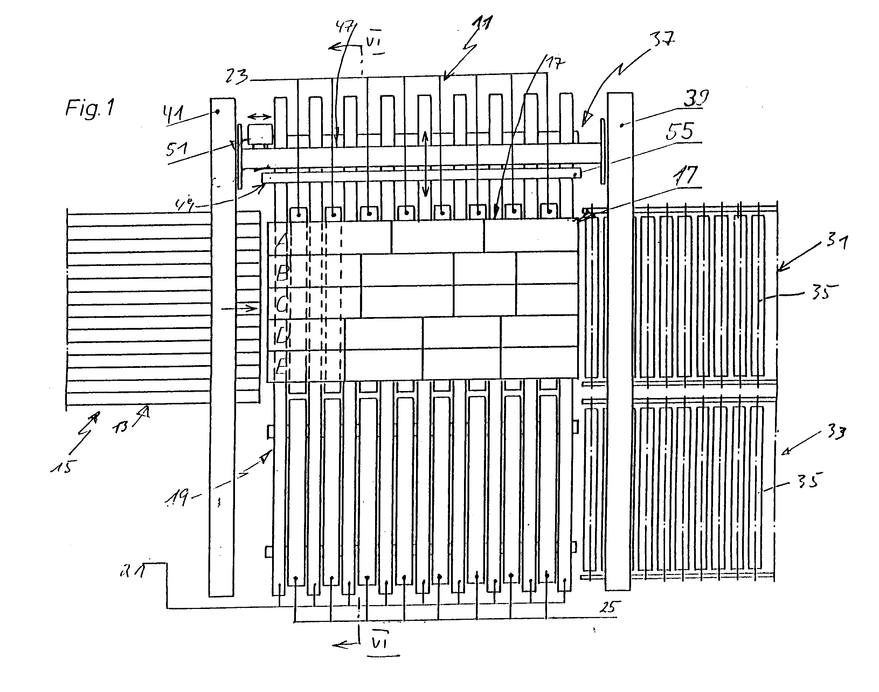

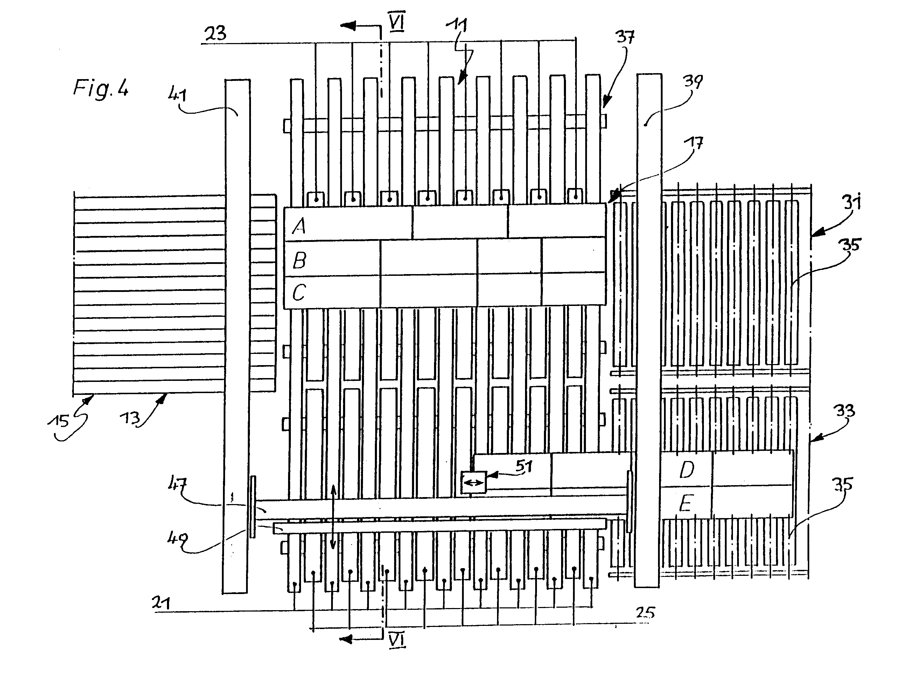

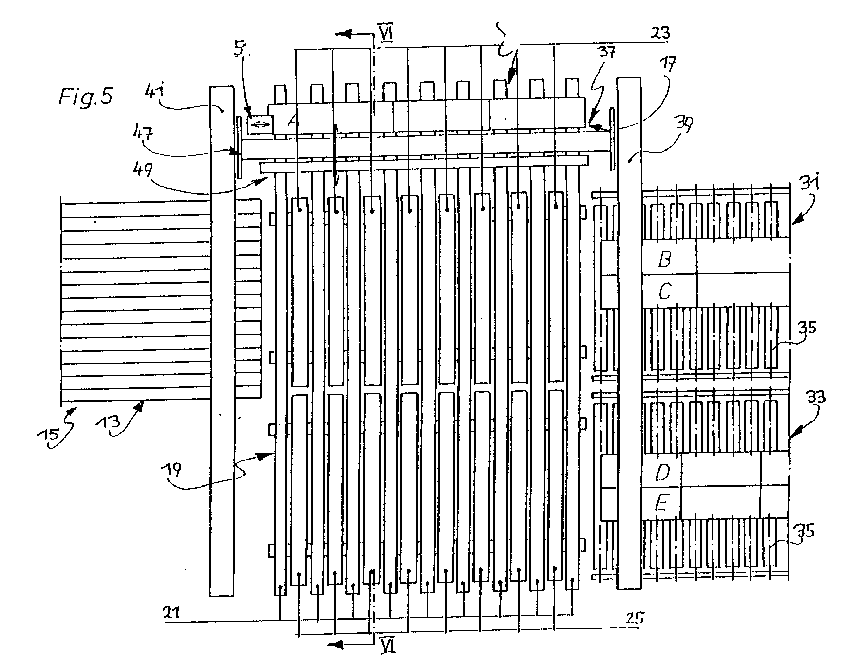

Die Vereinzelungsvorrichtung 11 weist hierzu einen als Ganzes mit 19 bezeichneten Aufnahmetisch auf, auf den der aufgeteilte Plattenstapel 17 aufgeschoben wird. Dieser Aufnahmetisch umfasst beispielsweise drei Rollentische 21, 23 und 25. In den Fig. 1 bis 4 sind die Rollen dieser Rollentische der Einfachheit halber lediglich durch rechteckförmige Felder angedeutet.

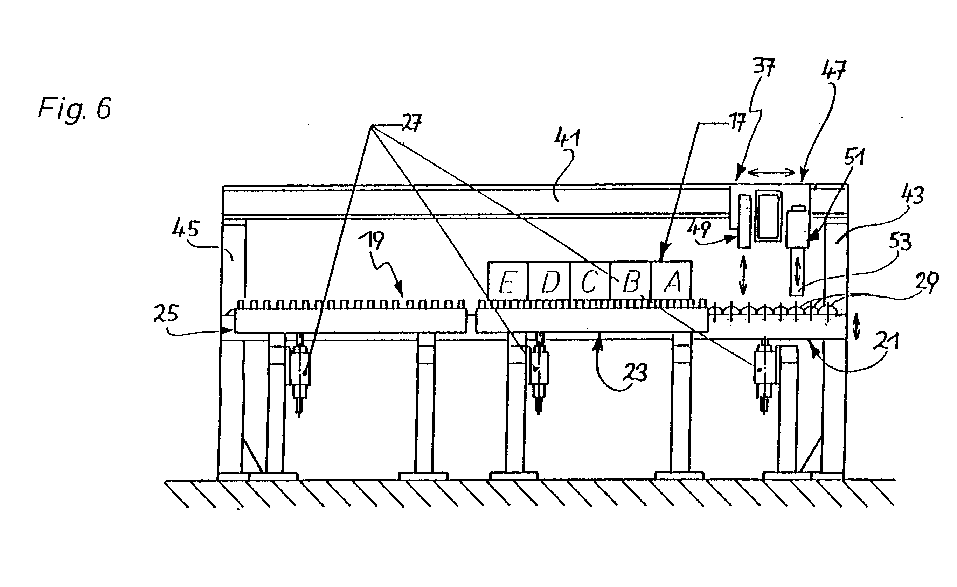

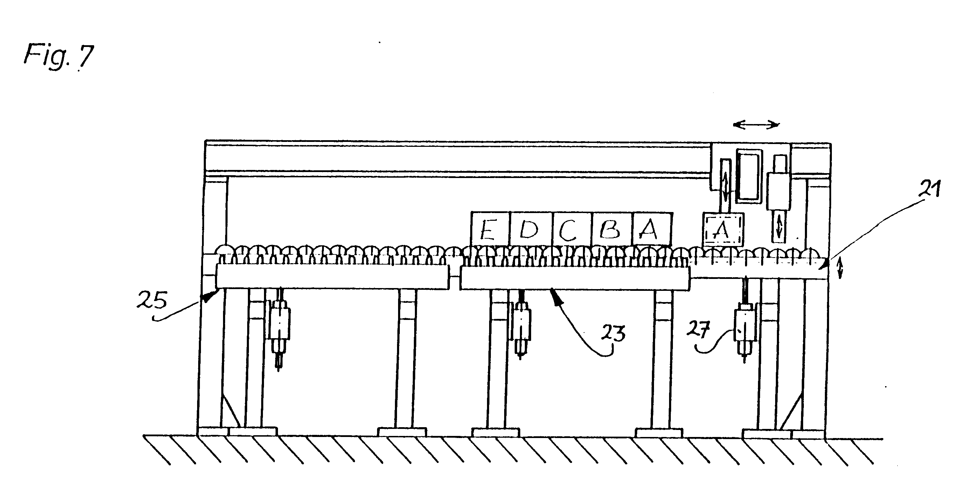

Wie die Fig. 6 und 7 zeigen, sind die Rollentische mittels Hubvorrichtungen 27, vorzugsweise in Form pneumatisch steuerbarer Zylinder, anheb- und absenkbar gelagert, derart, dass zum Transport von Stapelstreifen A bis E senkrecht zur Anlieferrichtung des aufgeteilten Plattenstapels 17 von der Plattenaufteilanlage 15 sich die Rollen 29 des Rollentisches 21 in einer oberen Aufnahmestellung (s. Fig. 7) befinden, während die beiden Rollentische 23 und 25 zur Aufnahme des aufgeteilten Plattenstapels 17 oder Teilen hiervon aus einer unteren Ausgangsstellung gemäss Fig. 7 in ihre Aufnahmestellung gemäss Fig. 6 nach oben gesteuert sind und dafür der Rollentisch 21 in seine untere Ausgangsstellung gemäss Fig. 6 abgesenkt ist.

Beiden Rollentischen 23 und 25 ist an der der Plattenaufteilanlage 15 gegenüberliegenden Seite der Vereinzelungsvorrichtung 11 jeweils eine Übernahmestation in Form eines Rollentisches 31 bzw. 33 zugeordnet, deren Rollen 35 parallel zur Achse der Laufrollen 29 der Rollentische 23 und 25 gelagert sind. Die Rollen 25 definieren eine horizontale Auflageebene, in der sich die Laufrollen 29 beider Rollentische 23 und 25 in ihrer angehobenen Stellung befinden.

Oberhalb des Aufnahmetisches 19 ist ein als Ganzes mit 37 bezeichnetes Anpressaggregat vorgesehen.

Dasselbe ist zwischen zwei zueinander parallel angeordnete und sich horizontal erstreckende Führungsschienen 39 und 41 angeordnet. Es weist einen in diesen Führungsschienen 39, 41 mittels einer nicht näher dargestellten Antriebsvorrichtung entsprechend einem Steuerprogramm verschiebbaren und feststellbaren Verschiebewagen 47 auf, der beim vorliegenden Ausführungsbeispiel an jeder Längsseite ein Anpressorgan 49 bzw. 51 trägt.

Das Anpressorgan 49 bildet einen beispielsweise pneumatisch anheb- und absenkbaren Druckbalken, der durch Absenken an einen Streifen des aufgeteilten Plattenstapels 17 anpressbar ist.

Das Anpressorgan 51 bildet einen längs des Verschiebewagens programmgesteuert verschiebbaren und feststellbaren Positionierwagen, der, wie Fig. 6 zeigt, beim vorliegenden Ausführungsbeispiel mit lediglich einem höhenverstellbaren Anpressglied 53 ausgestattet ist, das gleichfalls auf einen Streifen des aufgeteilten Plattenstapels unter Druck aufsetzbar ist.

Die erläuterte Vereinzelungsvorrichtung 11 arbeitet folgendermassen:
Zur Übernahme eines aufgeteilten Plattenstapels 17 vom Werkstückauflagetisch 13 der Plattenaufteilanlage 15 wird der Rollentisch 21 in seine in Fig. 6 gezeigte untere Ausgangsstellung und zumindest der sich an den Werkstückauflagetisch 13 anschliessende Rollentisch 23 in seine in Fig. 6 gezeigte Übernahmestellung nach oben gesteuert. Das Anpressaggregat 37 befindet sich dabei vorzugsweise in seiner in Fig. 1 gezeigten Ausgangsstellung.

Zum gewünschten Aufteilen des aufgeteilten Plattenstapels 17 tritt nunmehr das Anpress- und Transportaggregat in Funktion. Es sei in diesem Zusammenhang angenommen, dass beispielsweise die beiden quer aufgeteilten Streifen D und E dem Rollentisch 33 gemeinsam zugeführt und auf diesem zur weiteren Verarbeitung abtransport werden sollen.

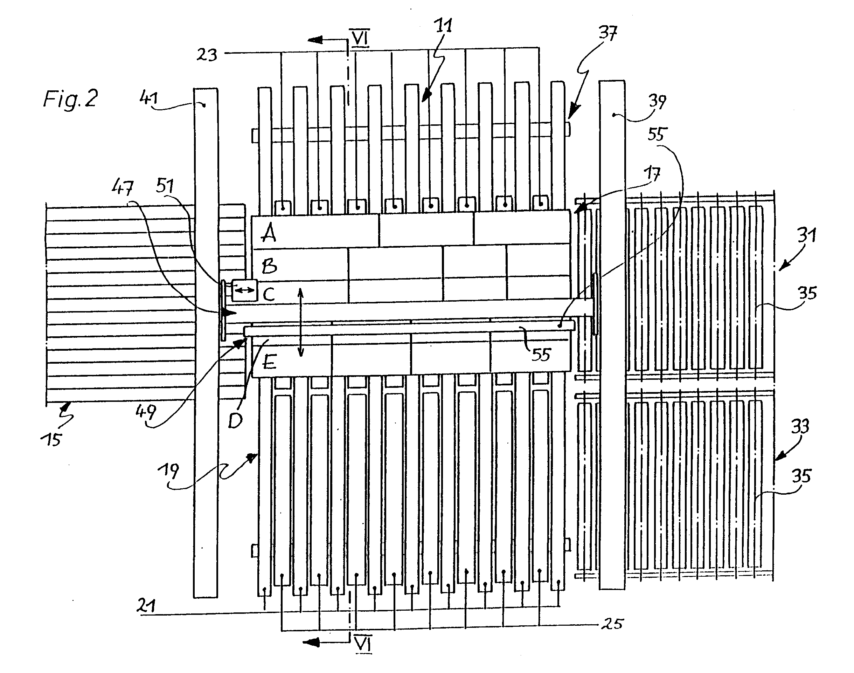

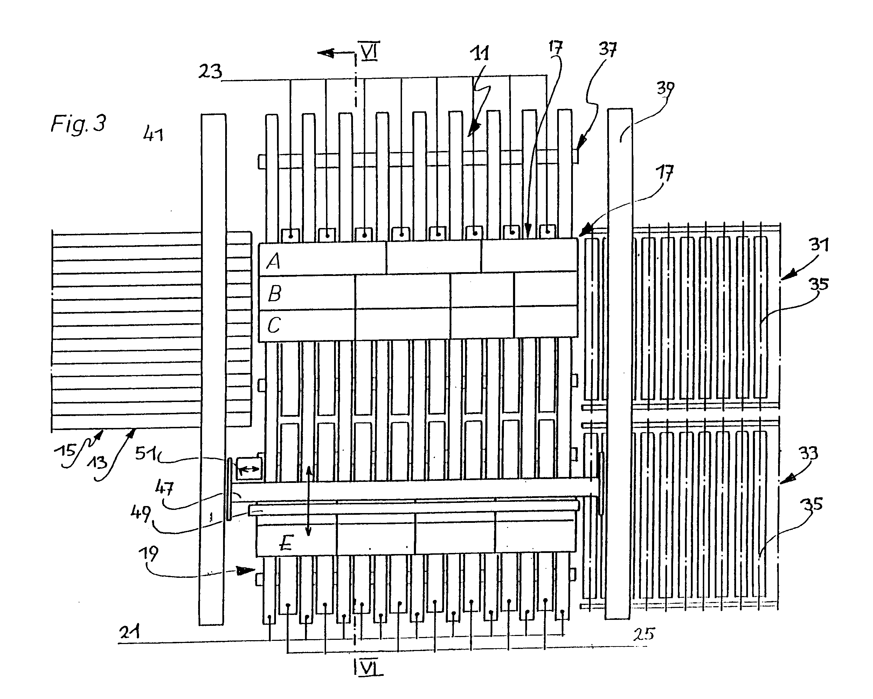

Zu diesem Zweck wird der Verschiebewagen 47 bei angehobenem, das Anpressorgan 49 bildenden Druckbalken 55 und angehobenem Anpressglied 53 des Positionierwagens 51 gemäss Fig. 2 über dem aufgeteilten Plattenstapel 17 so eingestellt, dass anschliessend der Druckbalken 55 auf den Plattenstreifen D abgesenkt und an diesen angepresst werden kann. Ruht der Druckbalken 55 auf dem Streifen D auf, wird der Verschiebewagen 47 erneut angesteuert und dieser verschiebt nun beide Streifen D und E gemeinsam in die in Fig. 3 gezeigte Übergabeposition vor den Rollentisch 33. Danach gibt der Druckbalken 55 den Streifen D durch Abheben frei; der Verschiebewagen 47 wird in der gleichen Richtung um eine solche Strecke weitergesteuert, dass sich nunmehr der Positionierwagen 51 über dem Streifen D befindet, wobei nunmehr dessen Anpressglied abgesenkt und auf den Streifen D aufgepresst wird. Danach setzt sich der Positionierwagen 51 erneut in Gang und verschiebt den Streifen D auf den Rollentisch 33. Nach Abheben des Anpressgliedes 53 und Zurücksteuern des Positionierwagens 51 zu einer Ausgangsstellung gemäss Fig. 3 setzt sich der Verschiebewagen 47 erneut in Gang und bringt den Positionierwagen 47 über den Streifen E, wonach in der zuvor erläuterten Weise durch dessen Anppessglied 53 dieser Streifen E auf den Rollentisch 33 aufgeschoben wird.

Die Konstruktion kann aber auch vorteilhaft so gestaltet sein, dass der Positionierwagen 51 mit einer Anzahl von Anpressgliedern 53 ausgestattet wird, die in Verschieberichtung des Verschiebewagens 47 in einem solchen Abstand hintereinander vorgesehen sind, dass während einer Verschiebeoperation des Positionierwagens 51 eine gewünschte Anzahl von Stapelstreifen auf die Rollentische 31 bzw. 33 aufgeschoben werden können.

Zum Längsverschieben der Stapelstreifen genügt es hierbei, wenn das bzw. jedes Anpressglied 53 des Positionierwagens 51 im Endbereich eines Stapelstreifens auf diesen abgesenkt und aufgedrückt wird, während zum Verschieben des Stapelstreifens parallel zu sich selbst diese mit Hilfe des Druckbalkens 55 über ihre gesamte Länge auf den Rollentisch 21 zwecks gleichzeitiger Mitnahme aller ihrer Streifenteilstücke aufzudrücken sind.

Es sei angenommen, dass beim nächsten Positioniergang des Anpress-und Transportaggregates 37 der Stapelstreifen A in die entgegengesetzte Richtung zu den Stapelstreifen D und E vom Rollentisch 21 heruntergefördert werden soll. Zu diesem Zweck wird der Verschiebewagen 47 derart positioniert, dass sich dessen Druckbalken 55 oberhalb des Stapelstreifens A befindet und dieser, nach Absenken des Druckbalkens 55, durch den Verschiebewagen gemäss Fig. 7, wie strichpunktiert angedeutet ist, abtransportiert werden kann. Ist der Stapelstreifen A in der Übergabestellung angelangt, wird durch entsprechende Ansteuerung des Verschiebewagens 47 dessen Positonierwagen im einen Endbereich des Stapelstreifens A derart positioniert, dass in der Folge mit Hilfe seines Antriebsgliedes 53 derselbe beispielsweise gemäss Fig. 5 nach rechts einem weiteren Rollentisch zugeführt werden kann, der in der Zeichnung nicht dargestellt ist. Die beiden noch in ihrer Anlieferstellung verbliebenen Stapelstreifen B und C werden mit Hilfe des Anpress-und Transportaggregates 37, analog zu den Stapelstreifen D und E dem Rollentisch 31 zugeführt, wobei hierzu der Rollentisch 21 wieder in seine untere Ausgangsstellung abzusenken ist und zumindest der Rollentisch 23 in seine obere Übernahmestellung zu steuern ist (Fig. 6).

Die beschriebene Vereinzelungsvorrichtung ermöglicht es in vorteilhafter Weise, in kürzester Zeit eine Plattenaufteilanlage, insbesondere eine Winkelanlage, verlassende, längs und quer aufgeteilte Plattenstapel zu vereinzeln, was im Hinblick darauf, dass die einzelnen, quer aufgeteilten Stapelstreifen einander berührend nebeneinander und hintereinander liegen, es normalerweise schwierig macht, einzelne Stapelstreifen oder ggf. nur Streifenteilstücke bzw. Einzelformate weiteren Stationen in einer im voraus zu bestimmenden Formation zuzuordnen. Dies lässt sich in der Kombination des durch den Druckbalken 55 gebildeten Anpressorganes 49 mit dem Positionierwagen 51 bzw. dessen Anpressglied 53 auf elegante Weise verwirklichen, indem der Positionierwagen 51 sich über Stapelstreifen derart einstellen lässt, dass sich jedes Streifenteilstück einer entsprechenden Übernahmestation zufördern lässt.

Für den Transport von Stapelstreifen bzw. Streifenteilstücken bietet sich durch die Erfindung eine Lösung, die es gestattet, mit wenigen Mitteln zuverlässig und exakt derart zu arbeiten, dass die Kantenbündigkeit der aufeinanderliegenden Einzelformate dabei auch dann gewährleistet bleibt, wenn die Stapelstreifen eine Höhe von 200 mm und mehr aufweisen.

Die Erfindung beruht auf der Erkenntnis, dass es für ein kantenbündiges Verschieben aufeinanderliegender Plattenteilstücke ausreichend ist, wenn der dadurch gebildete Stapel auf eine reibungsarme Werkstückauflage gepresst und anschliessend das die Anpresskraft erzeugende Aggregat in der gewünschten Transportrichtung verschoben wird. Dabei reicht eine verhältnismässig kleine Anpresskraft aus, so dass als Werkstückauflage ausser Rollentische auch Lufttische einsetzbar sind.

Mit Hilfe der in der Zeichnung erläuterten Vereinzelungsvorrichtung ist zwar das erfindungsgemässe Verfahren vorteilhaft durchführbar; zugleich bildet sie aber auch in der Kombination der an ihrem Anpress- und Transportaggregat 37 vorgesehenen Anpressorgane 49 und 53 eine für sich schutzwürdige Anordnung zum Trennen einzelner Formate aus einem gesamten Aufteilbild sowohl einzeln als auch in Gruppen in Längsrichtung oder in Querrichtung zueinander.

## Patentansprüche

1. Verfahren zum Verschieben wenigstens eines Stapels (17) von kantenbündig aufeinandergestapelten streifen- oder plattenförmigen Werkstücken auf einer reibungsarmen Werkstückauflage (21, 23, 25),
**dadurch gekennzeichnet**,
daß der Stapel (17) auf die Werkstückauflage gepreßt und anschließend ein die Anpreßkraft erzeugendes Anpreß- und Transportaggregat (37) in Verschieberichtung gesteuert wird.

2. Vorrichtung zur Durchführung des Verfahrens nach Anspruch 1 mit einer reibungsarmen Werkstückauflage (21, 23, 25), dadurch gekennzeichnet, daß ein Anpreß- und Transportaggregat (37) parallel zur Werkstückauflage (21, 23, 25) verfahrbar ist und die Anpreßkraftrichtung senkrecht zur Werkstückauflage verläuft.

3. Vorrichtung nach Anspruch 2, dadurch gekennzeichnet, dass die Werkstückauflage ein Rollentisch mit wenigstens zwei Gruppen von um zueinander senkrechte Achsen gelagertenRollen (29) ist, wobei zwischen Paaren von zueinander koaxialen Rollen (29) der einen Rollengruppe jeweils eine Rolle (29) der anderen Rollengruppe gelagert ist und dass die Auflageebene durch jeweils eine der zueinander in der Höhe verstellbaren Rollengruppen definiert ist.

4. Vorrichtung nach Anspruch 3, dadurch gekennzeichnet, dass die Rollen (29) einer oder beider Rollengruppen in einer Drehrichtung antreibbar sind, die zu der Bewegungsrichtung des Anpress- und Transportaggregates (37) gleichgerichtet ist.

5. Vorrichtung nach einem der vorhergehenden Ansprüche 2 - 4, dadurch gekennzeichnet, dass das Anpress- und Transportaggregat (37) mindestens zwei, in zueinander senkrechten Richtungen steuerbare Anpressorgane (49, 53) aufweist.

6. Vorrichtung nach Anspruch 5, dadurch gekennzeichnet, dass Anpress- und Transportaggregat (37) samt Werkstückauflage (Rollentische 21, 23, 25) als Verteil- bzw. Vereinzelungsstation (11) einer Plattenaufteilanlage (15) nachgeschaltet ist.

7. Vorrichtung nach Anspruch 5 oder 6, dadurch gekennzeichnet, dass das Anpress- und Transportaggregat (37) einen in einem Führungsgestell (39, 41, 43, 45) oberhalb der Werkstückauflage (Rollentische 21, 23, 25) horizontal verfahrbaren Verschiebewagen (47) aufweist, der zwei Anpressorgane (49; 51, 53) trägt, von denen das eine (51, 53) sich parallel zum Verschiebewagen (47) erstreckt und das andere am Verschiebewagen (47) senkrecht zu dessen Verschieberichtung horizontal verschiebbar ist.

8. Vorrichtung nach Anspruch 7, dadurch gekennzeichnet, dass das sich parallel zum Verschiebewagen (47) erstreckende Anpressorgan (49) als Druckbalken (55) ausgebildet ist.

9. Vorrichtung nach Anspruch 7 oder 8, dadurch gekennzeichnet, dass das längs des Verschiebewagens (47) verfahrbare Anpressorgan (51, 53) mindestens zwei in Verschieberichtung des Schiebewagens (47) im Abstand hintereinander angeordnete Anpressglieder (53) aufweist.

10. Vorrichtung nach einem der vorhergehden Ansprüche 5 - 9, dadurch gekennzeichnet, dass die Rollentische (21, 23, 25) sowie das Anpress- und Transportaggregat (37) samt Anpressorganen (49; 51, 53) programmgesteuert verstellbar sind.

## Claims

1. Method for moving closely juxtaposed stacked strips or panel-shaped workpieces on a low-friction work support surface (21, 23, 25)
**characterized in that**
the stack (17) is pressed onto the work support surface, whereupon a pressing and transfer unit (37) generating the pressing force is controlled to act in the direction of movement.

2. Apparatus for carrying out the method according to claim 1, having a low-friction work support surface (21, 23, 35), characterized in that a pressing and transfer unit (37) can be moved in parallel to the work support surface (21, 23, 25) and that the pressing force is directed perpendicularly relative to the work support surface.

3. Device according to claim 2, characterized in that the work support surface is a roller table having at least two groups of rollers (29) seated on axes extending perpendicularly one relative to the other, the rollers being arranged in such a way that between every pair of mutually coaxial rollers (29) of the one roller group, there is arranged one roller (29) of the other roller group, and that the support surface is defined in each case by one of the roller groups, which latter are vertically adjustable one relative to the other.

4. Device according to claim 3, characterized in that the rollers (29) of one or of both roller groups can be driven in a direction of rotation equal to the sense of movement of the pressing and transfer unit (37).

5. Device according to any of the preceding claims 2 to 4, characterized in that the pressing and transfer unit (37) comprises at least two pressure members (49, 53) that can be controlled to move in mutually perpendicular directions.

6. Device according to claim 5, characterized in that the pressing and transfer unit (37), together with its work support surface (roller tables 21, 23, 25), is arranged downstream of a panel divider system (15) and serves as a distribution and/or separating station (11).

7. Device according to claim 5 or 6, characterized in that the pressing and transfer unit (37) comprises a traversing carriage (47) that can be horizontally displaced in a guiding frame (39, 41, 43, 45), above the work support surface (roller tables 21, 23, 25), and that carries two pressure members (49, 51, 53) one of which (51, 53) extends in parallel to the traversing carriage (47) while the other can be displaced horizontally on the traversing carriage (47), perpendicularly to the latter's direction of movement.

8. Device according to claim 7, characterized in that the pressure member (49) extending in parallel to the traversing carriage (47) is configured as pressure beam (55).

9. Device according to claim 7 or 8, characterized in that the pressure member (51, 53) that can be displaced along the traversing carriage (47) comprises at least two pressure members (53) arranged at a certain distance one behind the other in the direction of movement of the traversing carriage (47).

10. Device according to any of the preceding claims 5 to 9, characterized in that the roller tables (21, 23, 25), as well as the pressing and transfer unit (37), together with the pressure member (49; 51, 53) can be adjusted in program-controlled manner.

## Revendications

1. Procédé pour déplacer au moins une pile (17) de pièces en forme de bandes ou de panneaux empilées et juxtaposées sur une surface de support à faible coefficient de frottement (21, 23, 25),
**caractérisé en ce que**
la pile (17) est pressée sur le support et qu'ensuite un groupe de pression et de transport (37) est piloté en direction de déplacement.

2. Dispositif pour la réalisation du procédé selon la revendication 1 avec un support de pièces (21, 23, 25) à faible coefficient de frottement, caractérisé en ce que un groupe de pression et de transport (37) est déplaçable en parallèle au support (21, 23,25) et que le sens de la force de pression est vertical par rapport au support de pièces.

3. Dispositif selon la revendication 2, caractérisé en ce que le support de pièces consiste en une table à galets avec au moins deux groupes de galets (29) logés sur des axes perpendiculaires l'un par rapport à l'autre, un galet (29) de l'autre groupe de galets étant respectivement logé entre des paires de galets (29) coaxiaux de l'un des groupes de galets et que la surface de support est définie par respectivement un des groupes de galets réglables mutuellement en hauteur.

4. Dispositif selon la revendication 3, caractérisé en ce que les galets (29) de l'un ou des deux groupes sont entraînables dans un sens de rotation parallèle au sens de déplacement du groupe de pression et de transport (37).

5. Dispositif selon l'une des revendications précédentes 2 - 4, caractérisé en ce que le groupe de pression et de transport (37) présente au moins deux organes de pression (49, 53) pouvant être commandés dans des directions perpendiculaires l'une à l'autre.

6. Dispositif selon la revendication 5, caractérisé en ce que le groupe de pression et de transport (37) y compris le support de pièces (tables à galets 21, 23, 25) est monté comme station de distribution ou de dépariage (11) en aval d'une installation de partage de panneaux (15).

7. Dispositif selon la revendication 5 ou 6, caractérisé en ce que le groupe de pression et de transport (37) présente un chariot de déplacement déplaçable horizontalement dans un bâti de guidage (39, 41, 43, 45) au-dessus de la surface de support des pièces (tables à galets 21, 23, 25), le chariot portant deux organes de pression (49, 51, 53) dont un (51, 53) est parallèle au chariot de déplacement (47) et l'autre étant déplaçable horizontalement au chariot de déplacement (47) de façon perpendiculaire au sens de déplacement de ce dernier.

8. Dispositif selon la revendication 7, caractérisé en ce que l'organe de pression (49) parallèle au chariot de déplacement (47) est en forme de poutre de pression (55).

9. Dispositif selon la revendication 7 ou 8, caractérisé en ce que l'organe de pression (51, 53) déplaçable le long du chariot de déplacement (47) présente au moins deux éléments de pression (53) disposés avec un certain écart l'un derrière l'autre dans le sens de déplacement du chariot de déplacement (47).

10. Dispositif selon l'une des revendications précédentes 5 - 9, caractérisé en ce que les déplacements des tables à galets (21, 23, 25) ainsi que du groupe de pression et de transport (37) y compris les organes de pression (49, 51, 53) peuvent être commandés par programme.
